(19) Europäisches Patentamt
European Patent Office
Office européen des brevets

(11) **EP 2 086 308 B1**

(12) **EUROPEAN PATENT SPECIFICATION**

(45) Date of publication and mention
of the grant of the patent:
**19.01.2011 Bulletin 2011/03**

(51) Int Cl.:
***A01D 46/30*** *(2006.01)*

(21) Application number: **07815689.0**

(22) Date of filing: **28.09.2007**

(86) International application number:
**PCT/BE2007/000110**

(87) International publication number:
**WO 2008/037035 (03.04.2008 Gazette 2008/14)**

(54) **AUTONOMOUS FRUIT PICKING MACHINE**

AUTONOME FRÜCHTEPFLÜCKMASCHINE

MACHINE CUEILLEUSE DE FRUITS AUTONOME

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.09.2006 EP 06020463**
**13.03.2007 GB 0704813**

(43) Date of publication of application:
**12.08.2009 Bulletin 2009/33**

(73) Proprietors:
 • **Katholieke Universiteit Leuven**
 **3000 Leuven (BE)**
 • **ACRO - KHLimburg**
 **3590 Diepenbeek (BE)**

(72) Inventor: **CLAESEN, Eric**
**B-3590 Diepenbeek (BE)**

(74) Representative: **Quintelier, Claude et al**
**Gevers**
**Intellectual Property House**
**Holidaystraat 5**
**1831 Diegem (BE)**

(56) References cited:
 **WO-A-2006/013593    FR-A- 2 763 786**
 **US-A- 4 975 016**

## Description

### FIELD OF THE INVENTION

The present invention relates to an automatic fruit picking device and the use thereof in the harvesting of fruits.

### BACKGROUND OF THE INVENTION

The use of robots is no longer strictly limited to industrial environments. Also for outdoor activities, robotic systems are increasingly combined with new technologies to automate labour intensive work, such as e.g. fruit harvesting [2, 10]. There are two main approaches in robotic fruit harvesting being *bulk* [9, 10] or *fruit by fruit* harvesting [3, 11, US20050268587, EP428284 and WO2006063314].

Peterson et al. [9] developed a mechanical bulk robotic harvester for apples grown on narrow, inclined trellises. This type of bulk harvesting requires uniform fruit maturity at harvest, firm fruit, resistant to damage, and short/stiff limbs [10].

The use of a *fruit by fruit* picking machines does not suffer from any of the above restrictions. Moreover, using an appropriate vision system fruits of satisfactory size and maturity can be selected for harvesting and sorted immediately after picking. Nevertheless, at present the use of such automatic harvest machines is limited. This is due to the fact that for most of the currently available machines the number of fruits picked per time unit is rather low and is not competitive with manual fruit harvesting. Furthermore, in many cases automatic *fruit by fruit* picking is associated with more damage to the picked fruit.

It is an object of the present invention to provide an automatic *fruit by fruit* picking machine, which has an economical picking rate with a minimal damage to the picked fruit. The fruit picking device of the present invention comprises a robot arm carrying a suction grabber and a vision system for the identification of a fruit and the determination of the position of said fruit relative to the suction grabber. The vision system of the machine of the present invention is arranged such that the spatial co-ordinates of a fruit as provided by said vision system can be readily used to steer the suction grabber towards the fruit, without the need for complex transformation of the vision system co-ordinates into robot co-ordinates. This set-up of the vision system allows limiting the calculation time required for carrying out a picking cycle, which significantly enhances the time-efficiency of this automatic *fruit by fruit* picking machine.

### SUMMARY OF THE INVENTION

In a first object the present invention provides a fruit picking device which comprises a robot arm carrying a suction grabber and a vision system for the identification of a fruit and the determination of the position of said fruit relative to the suction grabber. The vision system of the device of the present invention is arranged such that the spatial co-ordinates of a fruit as provided by said vision system can be readily used to steer the suction grabber towards the fruit, without the need for complex transformation of the vision system co-ordinates into robot co-ordinates. This set-up of the vision system allows limiting the calculation time required for carrying out a picking cycle, which significantly enhances the time-efficiency of this automatic *fruit by fruit* picking device.

In a second object the present invention provides a picking hand to be mounted on a robot. Said picking hand comprises a camera installed in a housing on which a funnel-like suction cup and a connector comprising connections for the transmission lines of a pneumatic circuit are mounted. Said camera and said suction cup being mounted relative to each other such that the camera is in-line with the funnel-like suction cup. The invention further relates to the use of this picking hand in robot machines, more particularly in robot machines which are used to pick, hold and move objects and which require a vision system to identify and/or determine the position of said objects.

### DESCRIPTION

### Legends *to the figures*

Figure 1: Functional scheme of the Autonomous Fruit Picking Machine.

Figure 2: 2A View of the assembled picking hand. 2B. Exploded view of the picking hand.

Figure 3: View of the picking hand mounted on the robot. The tool offsets of the camera (Zcam, Ycam) and the suction cup (Zapple, Yapple) are indicated. A-A' Indicates the axis through the focal point of the camera and the centre of the funnel-like suction cup.

Figure 4: 3D, top and front view of the camera model defining the camera frame and illustrating the computation of the rotation angles Rx and Ry, needed to centre the apple in the image

**Figure 5:** Illustration of the remaining distance calculation

**Figure 6:** Schematic overview of the control flow between vision system, PLC and robot during one apple-picking cycle

**Figure 7:** Schematic overview of the product catching device (12) linked to the conveyor belt (13) transporting the apples towards a palox mounted on a trailer (14).

*Description*

To automatically identify and steer the picking unit of a *fruit by fruit* picking machine towards a fruit on a plant, the device comprises a vision system comprising vision software, which analyses the information provided by one or more camera's. In the picking devices of the prior art the camera's are positioned such that the spatial co-ordinates of a fruit as identified by the vision system have to be transformed into robot coordinates. Typically, this transformation is complex and time consuming, which slows down the automatic picking process and hence limits the picking capacity of these fruit picking machines. Moreover, the transformation of the vision system co-ordinates to robot co-ordinates is often associated with error accumulations due to the lens distortions and/or acentric characteristics of the camera. The latter negatively affects the accuracy of the picking process and hence may cause damage to the fruit.

The present invention provides an automatic *fruit by fruit* picking device comprising a robot (11), for instance a six axes robot, which allows the controllable movement of a suction grabber for picking and holding a fruit. The suction grabber comprises a funnel-like suction cup (1) allowing partial enclosure of a fruit and means for generating an internal vacuum upon enclosure of a fruit (8) in said cup. Preferably, at least part of the suction cup (1) is made in a flexible material, such as rubber or silicone in order to closely enclose the fruit (8) upon applying a vacuum, while minimising the damage to the fruit. The funnel-like structure of the suction cup also allows to compensate for possible inaccuracies when positioning the suction cup near the fruit.

The device further comprises a vision system comprising a camera (6) and a vision algorithm executed on a computing unit, said vision system allowing the identification of a fruit within a camera image and the determination of the position of the suction grabber relative to said fruit. At least one camera (6) of the vision system is mounted on the robot in-line with the funnel-like suction cup (1), more preferably the camera is mounted such that the focal point of the camera is situated on the longitudinal axis (AA') through the centre of the funnel-like suction cup (1). This set-up of the camera (6) allows to readily input the spatial co-ordinates of a fruit as provided by the vision system into the controlling unit of the robot in order to steer the suction grabber towards said fruit. The possibility to use the vision system coordinates, without the need for complex transformation into robot co-ordinates, has the important advantage that the calculation time needed to steer the suction grabber towards the fruit is relatively short. Together with an efficient deposition of the fruit after picking this provides a short picking cycle and thus a relatively high picking capacity of the fruit picking devices according to the present invention.

In a preferred embodiment of the present invention the means to generate a vacuum of the suction grabber comprises a connector (3) mounted on the funnel-like suction cup (1) wherein said connector (3) is connected to a pneumatic circuit via transmission lines (11). In a more preferred embodiment the pneumatic circuit is connected to the connector (3) such that either air can be sucked out of the suction cup or that air can be blown out of the suction cup in order to blow away the leaves and branches covering the fruit.

In a more preferred embodiment of the fruit picking device according to the present invention, the suction cup (1) and the said connector (3) are mounted on the housing (2) of the camera such that the camera and the funnel-like suction cup (1) are in line, more preferably such that the focal point of the camera is situated on the longitudinal axis through the centre of the funnel-like suction cup. The camera housing (2) comprising the suction cup (1) and said connector (3) is then mounted on the flange of the robot (11). In an even more preferred embodiment the camera housing (2) comprises means to calibrate (5) the position of the camera in order to position the focal point of the camera on the longitudinal axis (AA') through the centre of the funnel-like suction cup (1).

To increase the vertical reach of the fruit picking device, the robot can be mounted on a lift system. Preferably, the movements of said lift system are automatically controlled.

Preferably, the fruit picking device of the present invention is mounted on a vehicle or trailer, for instance a tractor, in order to efficiently transport the device within a fruit orchard. Preferably, said vehicle or trailer comprises a stabilisation system in order to ensure a stable positioning of the robot platform during the picking at a given position in the orchard. Furthermore, an automatic navigation system can be integrated in the vehicle transporting the fruit picking device allowing an autonomous transportation of the fruit picking device through the orchard.

It was found that the performance of the vision system varied according to the lightning conditions. However, this problem can be overcome by shading the working area of the robot from external light. Therefore, it is preferred that a fruit picking device according to the present invention further comprises a support construction carrying a canvas shading the work area of the robot from artificial light. More preferably, the covered working area of the robot is illuminated by artificial light in order to obtain more or less constant lightning conditions assuring a constant performance of the vision system.

After picking a fruit it is typically transported towards a recipient for storing the fruits. In a preferred embodiment of the present invention the picking system comprises a funnel-like product catching device (12), which receives the picked fruit released by the suction grabber in order to guide it towards a recipient, for instance by guiding the fruit on a conveyor belt (13), which transports the fruit into the recipient (14). In a more preferred embodiment, said product catching device comprises flexible internal walls, which minimise damage to the fruits released into the product catching device. In a particular embodiment the product catching device comprises textile walls. In an even more preferred embodiment the product catching device comprises a valve, preferably covered with a soft material, at the bottom of the funnel in order to break the fall of a released fruit. Upon detection of the presence of a fruit on the valve, the valve opens to guide the fruit towards said recipient or conveyor belt.

It is a second object of the present invention to provide a picking hand to be mounted on a robot. Said picking hand comprises a camera (6) installed in a housing (2) on which a funnel-like suction cup (1) and a connector (3) comprising connections for the transmission lines (10) of a pneumatic circuit are mounted. Said camera (6) and said suction cup (1) being mounted relative to each other such that the camera is in-line with the funnel-like suction cup, more preferably such that the focal point of the camera is situated on the longitudinal axis through the centre of the funnel-like suction cup. Preferably, the housing (2) comprises inlets for lines (9) connecting the camera to a computing unit comprising a vision algorithm allowing the analysis of the images acquired by said camera. The invention further relates to the use of the picking hand in robot machines, more particularly in robot machines which are used to pick, hold and move objects and which require a vision system to identify and/or determine the position of said objects. More preferably the picking hand is used in *fruit by fruit* picking devices according to the present invention.

The invention is further illustrated by way of the following non-limiting illustrative embodiment.

### *Illustrative embodiment*

An autonomous fruit picking machine (AFPM) according to the present invention was built and tested in an apple orchard.

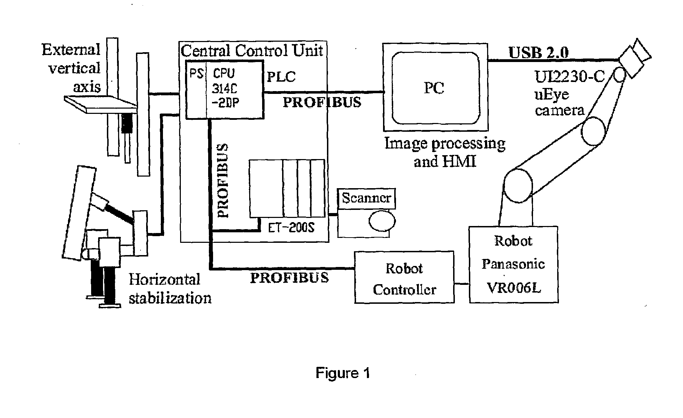

Figure 1 schematically illustrates the functional lay-out and data flow of the AFPM. On the rear part of an agricultural tractor a lift system was mounted carrying a platform on which an industrial six axes robot (Panasonic VR006L) was installed as manipulator for moving the picking hand with an integrated camera as part of a vision system. The lift system provided an external seventh axis of freedom providing a larger vertical range. The large vertical range provided by the lift allowed to use a lighter and more slender robot, making it easier to manipulate the robot arm in the trees.

The agricultural tractor comprised 2D horizontal stabilization comprising two hydraulic feet and one turn over cylinder, configured as a 3-point suspension. Controlled by two level sensors, the system ensured a stable positioning of the robot platform during the picking cycle. The agricultural tractor further comprised an autonomous installation providing compressed air, hydraulic and electricity required for the functioning of the fruit picking machine.

The entire system was under the control of an intelligent steering program run on a programmable logic controller (PLC). An operator can control the machine operations and monitor the automatic harvest via a touch panel PC with Human Machine Interface (HMI). The communication between the robot, the PLC and the HMI was realized using PROFIBUS, a standard communication network.

To warrant a constant performance of the vision system the working area was shaded of from external light by a canvas supported by a structure mounted on the lift. Furthermore, the working area of robot was illuminated by artificial lightning integrated in the said support structure.

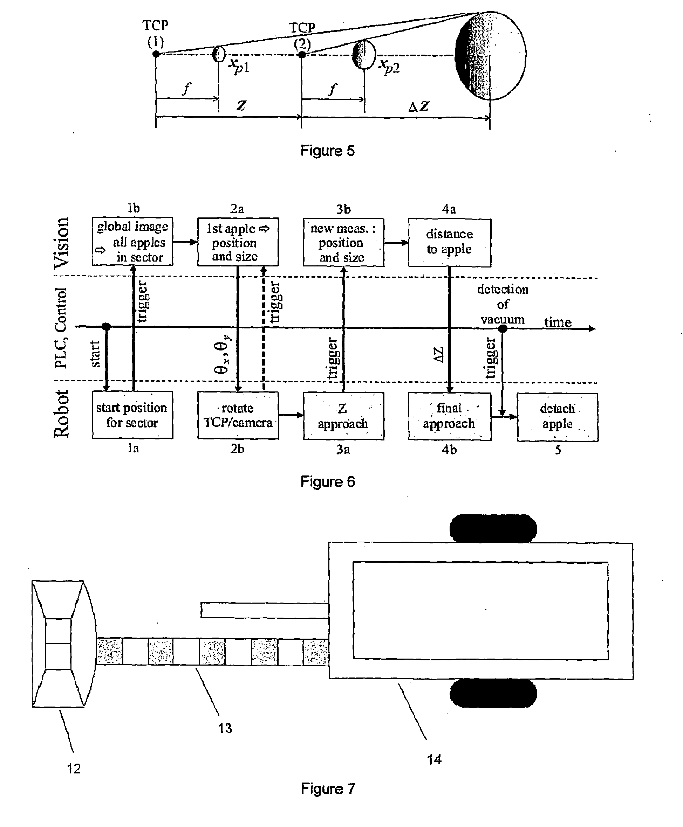

A funnel-like product catching device was mounted close to the robot. In this way the picked apples could be released from the suction cup with a limited movement of the manipulator. The funnel-like product catching device guided the apples towards a conveyor belt further transporting them into a palox (Figure 7).

Design of the picking hand of the AFPM:

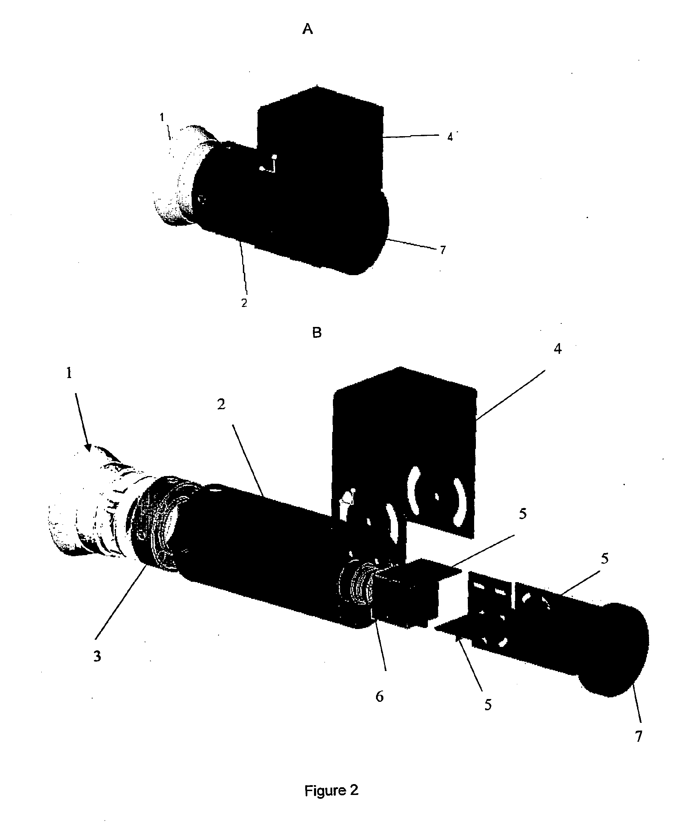

Figure 2 shows an assembled and exploded view of the picking hand of the AFPM. Said picking hand comprised a camera (6) installed in a housing (2) on which a funnel-like suction cup (1) and a connector (3) are mounted. The camera and the suction cup were mounted relative to each other such that the camera was in-line with the funnel-like suction cup.

It was found that fruits (apples) with a diameter varying between 50 and 150 mm could be efficiently picked with a suction cup having an maximum inner diameter of 80 mm which narrows down to an inner diameter of 40 mm over a distance of 35 mm.

The connector allowed to connect to a pneumatic circuit such that either air could be sucked out of the suction cup (to create a vacuum upon enclosure of a fruit) or that air could be blown out of the suction cup in order to blow away the leaves and branches covering the fruit.

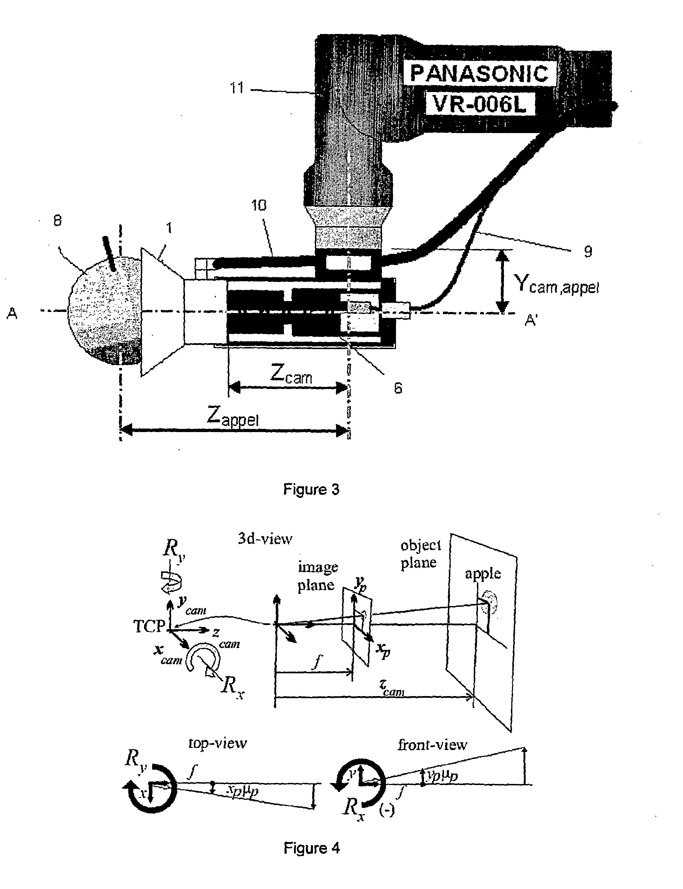

The camera housing was closed with a lid (7) at the opposite side of the suction cup (1) and comprised a quartz glass plate between the camera (6) and the suction cup/connector. In this way the camera was fully protected. The camera housing further comprised means to calibrate the position of the camera. The assembled picking hand was mounted on the flange of the robot as shown in figure 3.

The construction of the picking hand wherein the image centre of the camera was arranged on the longitudinal axis (AA') through the centre of the suction cup provided two important advantages.

- Given that the longitudinal axis through the funnel-like suction cup passed through the image centre of the camera significantly reduced the calculation time required to transform the co-ordinates of the vision system into coordinates suitable for steering the robot. Practically, this was achieved by defining the tool centre point of the robot in the focal point of the camera, taking into account the tool offsets of the camera (figure 3).
- Given that the camera could always be repositioned such that the apple was located in the image centre images distortions were reduced, which limited the required camera calibrations.

Description of a fruit picking cycle of the AFMP:

The autonomous harvesting operation was hierarchically structured in three levels. Once the AFPM was stationed in front of the tree with active stabilization (first level), it scaned the tree from for instance 40 look-out positions or sectors (second level). For each sector, all ripe apples were listed and picked one by one in a looped task (third level). A picking operation comprises following steps:

1. The position of the apple in the image, possibly after declustering, is determined. Only ripe apples with qualified size were selected.

2. The camera rotated around $x$- and $y$-axes, by $\mu_x$ and $\mu_y$ respectively, in order to point the optical axis straight to the apple. Positioning the camera by only rotating the wrist results in a small and therefore fast robot movement. The rotation angles were calculated as follows (see also Figure 4):

$$\theta_x = -\arctan(y_p \mu_p / f) \qquad (1)$$

for the rotation around the x-axis and

$$\theta_y = \arctan(x_p \mu_p / f) \qquad (2)$$

for the (simultaneous) rotation around the y-axis, with $f$ the focal length [mm], $\mu_p$ the pixel-size [mm/pix] and $x_p$; $y_p$ the measured centre of the apple in the image plane [pix]. As equations 1 and 2 show, the rotation angles did not depend on the distance to the apple $z_c am$. Only the focal length $f$ needed to be calibrated.

Even if the focal length was not exactly known, the final offset of the centre of the gripper with respect to the centre of the apple was situated within the margin of the gripper: e.g. a (rather large) error of 10% on the focal length causes an error of 1.5° on $\theta x$ (or $\theta y$) resulting in an offset of 1.9 cm for an apple at 1 m distance. Due to the funnel-like design of suction cup, this offset did not cause a faulty picking cycle.

3. While approaching the apple, several images were processed to calculate by triangulation the remaining distance to the apple. Given the distance $Z$, travelled between two images, and $x_{p1}$, $x_{p2}$ the measured radii of the (corresponding) apple from those two images, the remaining distance $\Delta Z$ to the apple yields

$$\Delta Z = \frac{x_{p1} Z}{x_{p2} - x_{p1}}. \qquad (3)$$

Figure 5 illustrates equation 3. Since the apple was maintained centred in the image, the correlation of a given apple in subsequent images was trivial.

4. Once the apple was within a given range of the gripper, the vacuum suction is activated. The detection of vacuum triggers the next step.

5. The apple was picked by rotating it and tilting it softly and is then put aside. The actual wrist/robot movement differed from section to section. It was programmed and optimized aiming at a minimal tree intrusion. After picking the apple was released in a funnel-like product catching device (12) comprising textile walls and a valve with a soft upper surface to break the fall of the apple. Upon detection of the presence of the apple on the valve, the valve was opened to guide the apple towards a conveyor belt (13) guiding the fruit into a palox (14) (Figure 7).

Figure 6 provides a schematic overview of these steps. The indicated numbers correspond to the step list for the picking cycle. The image processing was conducted on an industrial pentium IV 2 GHz PC with 1 GB RAM under Windows. The actual image processing was programmed with Halcon software [8] and took about 0.6 seconds for carrying out step 1. Note that the complete image processing was only needed at the start of a picking cycle. Subsequent image processing were limited to a small portion of the image which allowed to scale down to less functional steps.

Results of field experiments using the AFMP:

Field experiments conducted over a period of several weeks demonstrated that over 80% of the apples were detected and harvested. Apart from some stem pulls, the apples showed no bruises or damage at all. Apples that were not harvested were either not detectable by the vision system, for instance because they were heavily covered with leaves or not reachable for the robot manipulator. This problem can be at least partially solved by managing and trimming the orchard taking into account the characteristics of the AFMP.

## REFERENCES

[1] W. Appeltants and W. Ilsbroux. Automatische sturing van een plukwagen. Master's thesis, Katholieke Hogeschool Limburg, 1995.

[2] D. M. Bulanon, T. Kataoka, H. Okamoto, and S. Hata. Feedback control of manipulator using machine vision for robotic apple harvesting. In Proceedings of ASAE, Paper No. 053114, Tampa, USA, 2005.

[3] D. M. Bulanon, T. Kataoka, H. Ukamoto, and S. Hata. Development of a real-time machine vision system for the apple harvesting robot. In SICE Annual Conference in Sapporo, pages 595-598, Hokkaido Inst. of Techn., Japan, August 2004.

[4] S. Hutchinson, G. Hager, and P. Corke. A tutorial on visual servo control. IEEE Trans. on Robotics and Automation, 12(5):651-670, October 1996.

[5] A. Jimenez, R. Ceres, and J. Pons. A survey of computer vision methods for locating fruits on trees. Transactions of the ASAE, 43(6):1911-1920, 2000.

[6] J. Katypitiya, R. Eaton, A. Cole, C. Meyer, and G. Rodnay. Automation of an agricultural tractor for fruit picking. In IEEE Int. Conf. on Robotics and Automation, pages 3212-3217, Barcelona, Spain, April 2005.

[7] D. Mates, G. Aviña, and M. Devy. Robot visual navigation in semi-structured outdoor environments. In IEEE Int. Conf. on Robotics and Automation, pages 4702-4707, Barcelona, Spain, April 2005.

[8] MVTec Software GmbH, München, Germany. Halcon 7.1, Quick Guide, 2b edition, December 2006.

[9] D. L. Peterson, B. S. Bennedsen, B. A. Anger, and W. S. D. A systems approach io robotic bulk harvesting of apples. Transactions of the ASAE, 42(4):871-876, 1999.

[10] D. L. Peterson. Harvest mechanization progress and prospects for fresh market quality deciduous tree fruits. HortTechnology, 15(1):72-75, January-March 2005.

[11] A. I. Setiawan, T. Furukawa, and A. Preston. A low-cost gripper for an apple picking robot. In IEEE Int. Conf. on Robotics and Automation, pages 4448-4453, New Orleans, LA, April 2004.

[12] D. Stajnko and Z. Èmelik. Modelling of apple fruit growth by application of image analysis. Agriculturae Conspectus Scientificus, 70(2):59-64, 2005.

[13] J. Zhao, J. Tow, and J. Katupitiya. On-tree fruit recognition using texture properties and color data. In Int. Conf. on Intelligent Robots and Systems, pages 3993-3998, Alberta, Canada, August 2005.

**Claims**

1. A fruit picking device comprising

   (i) a robot allowing the controllable movement of
   (ii) a suction grabber for picking and hooding a fruit, comprising a funnel-like suction cup allowing partial enclosure of a fruit and means for generating an internal vacuum upon enclosure of a fruit in said cup, said fruit picking device further comprising;
   (iii) a vision system comprising a camera for identifying the presence of a fruit within a camera image and for determining the position of the suction grabber relative to said fruit;

   **characterised in that** the suction grabber is mounted on the housing of the camera and wherein the camera is mounted in-line with the funnat-like suction cup.

2. The fruit picking device according to claim 1 wherein the camera is mounted such that the focal point of then camera is situated on the longitudinal axis through the centre of the funnel-like suction cup.

3. The fruit picking device according to claims 1 or 2 further comprising a controlling unit allowing to automatically move the robot In order to displace the suction grabber towards a fruit using the information on the position of the suction grabber relative to said fruit as provided by the vision system.

4. The fruit picking device according to claims 1 to 3 wherein said means for generating an internal vacuum comprises a convector mounted on the suction cup, said connector being connected to a pneumatic circuit via transmission lines.

5. The fruit picking device according to claims 1 to 4 wherein said means for generating an internal vacuum allows for blowing air out of the suction cup in order to blow open the leaves and branches covering the fruits.

6. The fruit picking device according to any of the claims 1 to 5 wherein the suction cup is made in a flexible material.

7. The fruit picking device according to any of the claim 6 wherein said housing further comprises means to calibrate the position of the camera in order to position the optical centre of the camera on the longitudinal axis through the centre of the funnel-like suction cup.

8. The fruit picking devices according to claims 6 or 7 wherein the housing of the camera is mounted on the flange of the robot.

9. The fruit picking device according to claims 1 to 8 wherein the robot is a six axes robot.

10. The fruit picking device according to claims 1 to 9 further comprising a support structure carrying a canvas shading the working area of the robot from external light.

11. The fruit picking device according to claim 10 comprising artificial lightning to illuminate the working area of the robot.

12. The fruit picking device according to claims 1 to 11 comprising a product catching device to receive the fruits released by the suction grabber.

13. The fruit picking device according to claim 12 wherein the product catching devices comprises a funnel shaped textile.

14. The fruit picking device according to claim 13 wherein product catching device comprises a valve at the bottom of the funnel.

15. The fruit picking device according to claims 11 to 14 wherein the funnel is connected to a conveyor belt for transporting the fruit to a recipient for storing the fruit.

**Patentansprüche**

1. Eine Obstpflückmaschine, die Folgendes umfasst:

   (i) einen Roboter, der die steuerbare Bewegung
   (ii) eines Sauggreifers zum Pflücken und Halten einer Frucht erlaubt; welcher einen trichterähnlichen Saugbecher umfasst, der die teilweise Umschließung einer Frucht erlaubt, sowie Mittel zur Erzeugung eines internen Vakuums bei der Umschließung einer Frucht im erwähnten Becher, wobei die erwähnte Obstpflückmaschine ferner umfasst:
   (iii) ein Sichtsystem, das eine Kamera zur Erkennung der Anwesenheit einer Frucht innerhalb eines Kamerabildes und zur Bestimmung der Position des Sauggreifers zur erwähnten Frucht umfasst;

   **dadurch gekennzeichnet, dass** der Sauggreifer auf dem Gehäuse der Kamera montiert ist und wobei die Kamera inline mit dem trichterähnlichen Saugbecher montiert ist.

2. Die Obstpflückmaschine nach Anspruch 1, wobei die Kamera so montiert ist, dass sich der Brennpunkt der Kamera auf der Längsachse durch die Mitte des trichterähnlichen Saugbechers befindet.

3. Die Obstpflückmaschine nach Anspruch 1 oder 2, welche ferner eine Steuereinheit umfasst, die die automatische Bewegung des Roboters erlaubt, um den Sauggreifer zu einer Frucht hin zu bewegen, wobei die Informationen vom Sichtsystem über die Position des Sauggreifers in Bezug zur erwähnten Frucht benutzt werden.

4. Die Obstpflückmaschine nach den Ansprüchen 1 bis 3, wobei die erwähnten Mittel zur Erzeugung eines internen Vakuums einen Verbinder auf dem Saugbecher umfassen, wobei der erwähnte Verbinder über Übertragungsleitungen an einen Pneumatikkreislauf angeschlossen ist.

5. Die Obstpflückmaschine nach den Ansprüchen 1 bis 4, wobei die erwähnten Mittel zur Erzeugung eines internen Vakuums Luft aus dem Saugbecher strömen lassen, um die Blätter und Zweige, die das Obst verdecken, auseinander zu blasen.

6. Die Obstpflückmaschine nach irgendeinem der Ansprüche 1 bis 5, wobei der Saugbecher aus einem flexiblen Material besteht.

7. Die Obstpflückmaschine nach Ansprüch 6, wobei das erwähnte Gehäuse ferner Mittel zur Kalibrierung der Position der Kamera umfasst, um den optischen Mittelpunkt der Kamera auf die Längsachse durch die Mitte des trichterähnlichen Saugbechers zu positionieren.

8. Die Obstpflückmaschine nach Anspruch 6 oder 7, wobei das Gehäuse der Kamera auf dem Flansch des Roboters montiert ist.

9. Die Obstpflückmaschine nach den Ansprüchen 1 bis 8, wobei der Roboter ein sechsachsiger Roboter ist.

10. Die Obstpflückmaschine nach den Ansprüchen 1 bis 9, die ferner eine Konstruktion mit einem Tuch umfasst, das den Arbeitsbereich des Roboters vor externem Licht schützt.

11. Die Obstpflückmaschine nach Anspruch 10, die Kunstlicht zur Beleuchtung des Arbeitsbereichs des Roboters umfasst.

12. Die Obstpflückmaschine nach den Ansprüchen 1 bis 11, die eine Auffangvorrichtung umfasst, um das vom Sauggreifer abgegebene Obst anzunehmen.

13. Die Obstpflückmaschine nach Anspruch 12, wobei die Auffangvorrichtung einen trichterförmigen Stoff umfasst.

14. Die Obstpflückmaschine nach Anspruch 13, wobei die Auffangvorrichtung eine Klappe am Boden des Trichters umfasst.

**15.** Die Obstpflückmaschine nach den Ansprüchen 11 bis 14, wobei der Trichter mit einem Förderband zur Beförderung des Obstes zu einem Behälter zur Lagerung des Obstes verbunden ist.

**Revendications**

**1.** Dispositif cueilleur de fruits comprenant :

(i) un robot permettant le mouvement commandable de
(ii) un dispositif de préhension par aspiration pour cueillir et tenir un fruit, comprenant une ventouse en forme d'entonnoir permettant d'entourer en partie un fruit et des moyens pour générer un vide intérieur lorsque ladite ventouse entoure un fruit, ledit dispositif cueilleur de fruits comprenant en outre :
(iii) un système de vision comprenant une caméra pour identifier la présence d'un fruit dans une image de caméra et pour déterminer la position du dispositif de préhension par aspiration par rapport audit fruit,

**caractérisé en ce que** le dispositif de préhension par aspiration est monté sur le boîtier de la caméra et la caméra est montée alignée sur la ventouse en forme d'entonnoir.

**2.** Dispositif cueilleur de fruits selon la revendication 1, dans lequel la caméra est montée de telle manière que le foyer de la caméra soit situé sur l'axe longitudinal passant par le centre de la ventouse en forme d'entonnoir.

**3.** Dispositif cueilleur de fruits selon la revendication 1 ou 2 comprenant en outre une unité de commande permettant de mouvoir automatiquement le robot afin de déplacer la ventouse vers un fruit en utilisant l'information sur la position du dispositif de préhension par aspiration par rapport audit fruit telle que fournie par le système de vision.

**4.** Dispositif cueilleur de fruits selon l'une quelconque des revendications 1 à 3, dans lequel ledit moyen pour générer un vide intérieur comprend un connecteur monté sur la ventouse, ledit connecteur étant connecté à un circuit pneumatique par des lignes de transmission.

**5.** Dispositif cueilleur de fruits selon l'une quelconque des revendications 1 à 4, dans lequel ledit moyen pour générer un vide intérieur permet d'expulser de l'air de la ventouse afin d'écarter les feuilles et branches couvrant les fruits.

**6.** Dispositif cueilleur de fruits selon l'une quelconque des revendications 1 à 5, dans lequel la ventouse est réalisée dans un matériau flexible.

**7.** Dispositif cueilleur de fruits selon la revendication 6, dans lequel ledit boîtier comprend en outre des moyens pour calibrer la position de la caméra afin de positionner le centre optique de la caméra sur l'axe longitudinal passant par le centre de la ventouse en forme d'entonnoir.

**8.** Dispositif cueilleur de fruits selon la revendication 6 ou 7, dans lequel le boîtier de la caméra est monté sur la bride du robot.

**9.** Dispositif cueilleur de fruits selon l'une quelconque des revendications 1 à 8, dans lequel le robot est un robot à six axes.

**10.** Dispositif cueilleur de fruits selon l'une quelconque des revendications 1 à 9 comprenant en outre une structure de support portant une toile ombrageant la zone de travail du robot par rapport à la lumière extérieure.

**11.** Dispositif cueilleur de fruits selon la revendication 10 comprenant un éclairage artificiel pour illuminer la zone de travail du robot.

**12.** Dispositif cueilleur de fruits selon la revendication 11 comprenant un dispositif récepteur de produit pour recevoir les fruits libérés par le dispositif de préhension par aspiration.

**13.** Dispositif cueilleur de fruits selon la revendication 12, dans lequel le dispositif récepteur de produit comprend un textile en forme d'entonnoir.

**14.** Dispositif cueilleur de fruits selon la revendication 13, dans lequel le dispositif récepteur de produit comprend une vanne au fond de l'entonnoir.

15. Dispositif cueilleur de fruits selon l'une quelconque des revendications 11 à 14, dans lequel l'entonnoir est relié à une bande transporteuse destinée à transporter le fruit vers un récipient pour stocker le fruit.

Figure 1

A

B

Figure 2

Figure 3

Figure 4

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050268587 A
- EP 428284 A
- WO 2006063314 A

**Non-patent literature cited in the description**

- **W. Appeltants ; W. Ilsbroux.** Automatische sturing van een plukwagen. *Master's thesis, Katholieke Hogeschool Limburg,* 1995
- **D. M. Bulanon ; T. Kataoka ; H. Okamoto ; S. Hata.** Feedback control of manipulator using machine vision for robotic apple harvesting. *Proceedings of ASAE, Paper No. 053114,* 2005
- **D. M. Bulanon ; T. Kataoka ; H. Ukamoto ; S. Hata.** Development of a real-time machine vision system for the apple harvesting robot. *SICE Annual Conference in Sapporo,* 595-598
- *Hokkaido Inst. of Techn.,* August 2004
- **S. Hutchinson ; G. Hager ; P. Corke.** A tutorial on visual servo control. *IEEE Trans. on Robotics and Automation,* October 1996, vol. 12 (5), 651-670
- **A. Jimenez ; R. Ceres ; J. Pons.** A survey of computer vision methods for locating fruits on trees. *Transactions of the ASAE,* 2000, vol. 43 (6), 1911-1920
- **J. Katypitiya ; R. Eaton ; A. Cole ; C. Meyer ; G. Rodnay.** Automation of an agricultural tractor for fruit picking. *IEEE Int. Conf. on Robotics and Automation,* April 2005, 3212-3217
- **D. Mates ; G. Aviña ; M. Devy.** Robot visual navigation in semi-structured outdoor environments. *IEEE Int. Conf. on Robotics and Automation,* April 2005, 4702-4707
- MVTec Software GmbH. Quick Guide, December 2006
- **D. L. Peterson ; B. S. Bennedsen ; B. A. Anger ; W. S. D. A.** systems approach io robotic bulk harvesting of apples. *Transactions of the ASAE,* 1999, vol. 42 (4), 871-876
- **D. L. Peterson.** Harvest mechanization progress and prospects for fresh market quality deciduous tree fruits. *HortTechnology,* January 2005, vol. 15 (1), 72-75
- **A. I. Setiawan ; T. Furukawa ; A. Preston.** A low-cost gripper for an apple picking robot. *IEEE Int. Conf. on Robotics and Automation,* April 2004, 4448-4453
- **D. Stajnko ; Z. Èmelik.** Modelling of apple fruit growth by application of image analysis. *Agriculturae Conspectus Scientificus,* 2005, vol. 70 (2), 59-64
- **J. Zhao ; J. Tow ; J. Katupitiya.** On-tree fruit recognition using texture properties and color data. *Int. Conf. on Intelligent Robots and Systems,* August 2005, 3993-3998